# EUROPEAN PATENT APPLICATION

(11) **EP 3 306 060 A1**
(43) Date of publication of application: **11.04.2018**
(21) Application number: 16802920.5
(22) Date of filing: 11.04.2016
(51) Int. Cl.: F02D 29/06, B60R 16/03, B60R 16/04, F01N 3/20, F02D 45/00

(54) **VEHICULAR STORAGE BATTERY SYSTEM FOR VEHICLES HAVING EXHAUST GAS PURIFYING DEVICE, AND CONTROL METHOD FOR SAME**

(30) Priority: 01.06.2015 JP 2015111717
(71) Applicant: TPR Co., Ltd., Tokyo 100-0005 (JP); Toc Capacitor Co., Ltd., Okaya-shi, Nagano 394-0001 (JP)
(72) Inventor: INOUE, Takashi, Tokyo 100-0005 (JP); INOUE, Atsutoshi, Okaya-shi Nagano 394-0001 (JP); SUMITA, Masaaki, Okaya-shi Nagano 394-0001 (JP)
(74) Representative: Gill Jennings & Every LLP
(86) International application number: PCT/JP2016/061725
(87) International publication number: WO 2016/194483

(57) **Abstract**

The objective of the invention is to cause a load for reducing the warm-up time of an exhaust gas purifying device to be generated efficiently, and to make effective use of the energy required to reduce the warm-up time of the exhaust gas purifying device. The present invention relates to a vehicular storage battery system used in a vehicle 1 having an exhaust gas purifying device 12 which purifies exhaust gas from an engine 11, the vehicular storage battery system including: a capacitor 14 which stores electric power generated by an electricity generator 13 driven by the engine 11; an electric power control circuit 17 which controls the supply of electric power generated by the electricity generator 13 to a battery 15 and to the capacitor 14; a warm-up control device 18 which determines whether or not the exhaust gas purifying device 12 requires warming up; and a control means which, if the warm-up control device 18 determines that the exhaust gas purifying device 12 requires warming up, controls the electric power control circuit 17, and after the engine 11 has started up, causes the engine 11 to drive the electricity generator 13 and causes the electric power generated by the electricity generator 13 to be supplied more preferentially to the capacitor 14 than to the battery 15.

## Description

### Technical Field

The present invention relates to a vehicle power storage system and a method of controlling the vehicle power storage system.

### Background Art

In a vehicle including an internal combustion engine (hereinafter referred to as "engine") as one travel power source, for example, a motor vehicle, an exhaust gas purifying device, for example, a catalyst converter, is provided in an exhaust system as environmental countermeasures for the exhaust gas. The exhaust gas purifying device using the catalyst cannot exert a sufficient exhaust gas purifying action unless a catalyst temperature is equal to or higher than an active temperature. Thus, the exhaust gas purifying device using the catalyst needs to be warmed in a short period in order to decrease unpurified exhaust gas, which is exhausted immediately after the engine is started.

A general method of decreasing the period for the warming of the exhaust gas purifying device is to increase an amount of exhaust gas exhausted from the engine to the exhaust gas purifying device, and to increase the temperature of the exhaust gas so as to provide heat source for the warming by increasing engine output. However, when the engine output is increased from a low-load state including an idle state, the state of the engine is shifted to a state in which a mechanical friction of the engine becomes larger by an amount required for absorbing an increased amount of the output. In other words, a rotation speed of the engine becomes higher. Therefore, there arises such a problem as sudden start at the time of the start from the idle state. Moreover, under the state in which the rotation speed of the engine is high, the mechanical friction of the engine is high, and thus there arises a problem in that a sense of discomfort increases, for example, noises and vibrations increase. As countermeasures against those problems, a load corresponding to the increase in the engine output is indispensable.

As the countermeasures, in Patent Literature 1, there is disclosed a method involving driving a generator with an engine to generate power while the exhaust gas purifying device is being warmed, and using the generated power to charge a battery, thereby increasing a load imposed on the engine so that the exhaust gas purifying device is warmed.

Meanwhile, in Patent Literature 2, an electric heating type catalyst is heated through power stored in a capacitor, which is provided independently of a battery for a vehicle.

### Citation List

### Patent Literature

[PTL 1] JP 2002-89316 A
[PTL 2] JP 2006-250134 A

### Summary of Invention

### Technical Problem

With the method disclosed in Patent Literature 1, which involves driving the generator to increase the load imposed on the engine and charging the battery with the generated power to warm the exhaust gas purifying device, in order to warm the exhaust gas purifying device in a short period, it is necessary to impose the load on the engine in a short period and use the generated power to charge the battery. However, the battery is charged with the power by means of a chemical reaction, and thus current that can be supplied to the battery during the charging is small, resulting in a possible failure to use the generated power for the charging. Therefore, the exhaust gas purifying device may not sufficiently be warmed.

Moreover, in the method involving driving the generator to increase the load on the engine and using the generated power to charge the battery so as to warm the exhaust gas purifying device, it is necessary for the battery to be charged with the power generated by the generator. For example, when the battery is fully charged, the battery may not be charged with the power generated by the generator. Therefore, the exhaust gas purifying device may not sufficiently be warmed.

Moreover, in Patent Literature 2, surplus power that cannot be used to charge the battery is stored in the capacitor, and the stored power is supplied to the electric heating type catalyst when the electric heating type catalyst is to be warmed. However, because of self-discharge characteristic , when the power stored in the capacitor is decreased, the exhaust gas purifying device may not be warmed.

The present invention has been made in view of the above-mentioned problems, and therefore has an object to provide a vehicle power storage system and a method of controlling the vehicle power storage system, which are capable of decreasing a period for warming an exhaust gas purifying device.

### Solution to Problem

According to one embodiment of the present invention, there is provided a vehicle power storage system to be used in a vehicle including an exhaust gas purifying device configured to purify exhaust gas of an engine, the vehicle power storage system including: a capacitor configured to store power generated by a generator driven by the engine; power control means for controlling supply of the power generated by the generator to a battery of the vehicle and the capacitor; determination means for determining whether or not warming of the exhaust gas purifying device is necessary; and control means for controlling, when the determination means determines that the warming of the exhaust gas purifying device is necessary, the power control means to cause the engine to drive the generator after the engine is started, and to supply the power generated by the generator to the capacitor with priority over the battery for storage of the power.

In this case, the power control means may be configured to further control supply of the power stored in the capacitor to at least the battery, and the control means may be configured to control the power control means to control a voltage of the capacitor so that the voltage of the capacitor is equal to or less than a predetermined voltage before the start of the engine.

For example, the power control means may be configured to charge the battery with the power stored in the capacitor.

As another example, the power control means may be configured to supply the power stored in the capacitor to the battery and an electrical component, or only to the electrical component.

Further, the vehicle power storage system may further include means for preventing power of the battery of the vehicle from being supplied to the capacitor.

According to one embodiment of the present invention, there is provided a method of controlling a vehicle power storage system to be used in a vehicle including an exhaust gas purifying device configured to purify exhaust gas of an engine, the method including: a power control step of controlling supply of the power generated by the generator to a battery of the vehicle and a capacitor; a determination step of determining whether or not warming of the exhaust gas purifying device is necessary; and a control step of causing, when it is determined in the processing of the determination step that the warming of the exhaust gas purifying device is necessary, by the processing of the power control step, the engine to drive the generator after the engine is started, and supplying the power generated by the generator to the capacitor with priority over the battery for storage of the power.

According to one embodiment of the present invention, there is provided a vehicle power storage system to be used in a vehicle including an exhaust gas purifying device configured to purify exhaust gas of an engine, the vehicle power storage system including: a capacitor configured to store power generated by a generator driven by the engine; power control means for controlling supply of the power generated by the generator to the capacitor; determination means for determining whether or not warming of the exhaust gas purifying device is necessary; control means for controlling, when the determination means determines that the warming of the exhaust gas purifying device is necessary, the power control means to cause the engine to drive the generator after the engine is started, and to supply the power generated by the generator to the capacitor with priority over the battery for storage of the power; and means for preventing power of the battery of the vehicle from being supplied to the capacitor.

### Advantageous Effects of Invention

According to the present invention, the period for warming the exhaust gas purifying device using the catalyst can be decreased.

### Brief Description of Drawings

FIG. 1 is a configuration diagram for illustrating a vehicle power storage system according to an embodiment of the present invention for a vehicle including an exhaust gas purifying device.
FIG. 2 is a diagram for illustrating an example of a configuration in which a power control circuit of FIG. 1 is a switch circuit.
FIG. 3 is a diagram for illustrating an example of the configuration in which the power control circuit of FIG. 2 is the switch circuit, and is a diagram for illustrating a state in which a generator and a capacitor are connected to each other.
FIG. 4 is a diagram for illustrating an example of the configuration in which the power control circuit of FIG. 2 is the switch circuit, and is a diagram for illustrating a state in which the capacitor and a battery/electrical components are connected to each another.
FIG. 5 is a diagram for illustrating an example of the configuration in which the power control circuit of FIG. 2 is the switch circuit, and is a diagram for illustrating a state in which the capacitor and the electrical components are connected to each other.
FIG. 6 is a diagram for illustrating an example of the configuration in which the power control circuit of FIG. 2 is the switch circuit, and is a diagram for illustrating a state in which the generator and the battery/electrical components are connected to each another.
FIG. 7 is a flowchart for illustrating an operation of a warming control device of FIG. 2.
FIG. 8 is a diagram for illustrating an example of a configuration in which the power control circuit of FIG. 2 includes a DC/DC converter.
FIG. 9 is a diagram for illustrating an example of a circuit in which the DC/DC converter of FIG. 8 is a buck DC/DC converter.
FIG. 10 is a diagram for illustrating an example of a circuit in which the DC/DC converter of FIG. 8 is a boost DC/DC converter.
FIG. 11 is a diagram for illustrating an example of a configuration in which a switch SW3 of the power control circuit of FIG. 2 is omitted.
FIG. 12 is a flowchart for illustrating an operation of the warming control device of FIG. 11.
FIG. 13 is a diagram for illustrating an example of a configuration in which the power control circuit of FIG. 1 includes a diode.
FIG. 14 is a flowchart for illustrating an operation of a warming control device of FIG. 13.

### Description of Embodiments

### (Configuration)

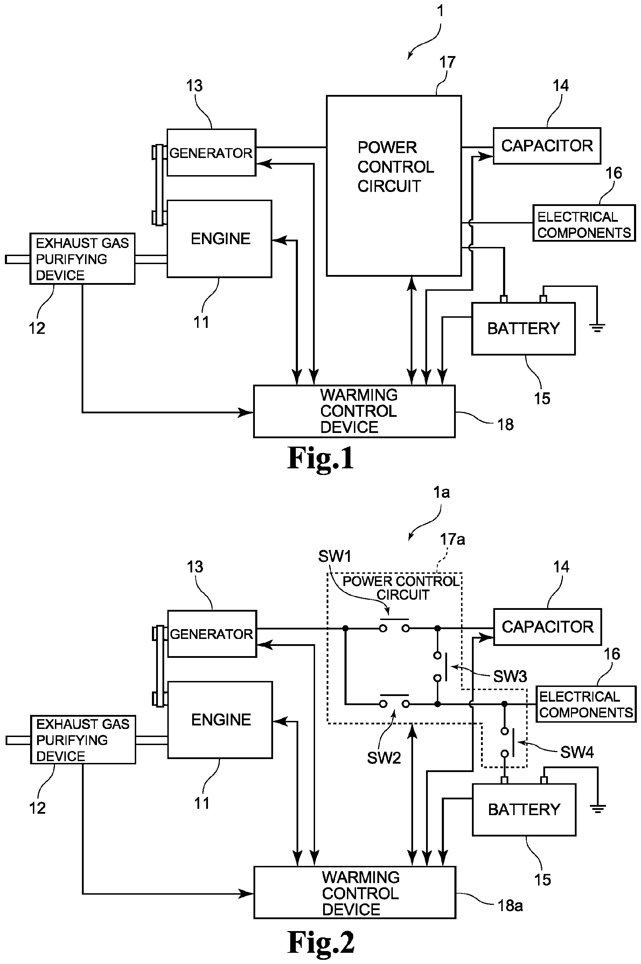

Referring to FIG. 1, a description is now given of a configuration of a vehicle 1 in an embodiment of the present invention . The vehicle 1 includes an engine 11, an exhaust gas purifying device 12, a generator 13, a capacitor 14 configured to store power generated by the generator 13, a battery 15, electrical components 16, a power control circuit 17 serving as charging control means for charging the battery 15 with the power stored in the capacitor 14, or power supply control means for supplying the power stored in the capacitor 14 to the electrical components 16, and a warming control device 18 configured to control warming of the exhaust gas purifying device 12.

The engine 11 is a travel power source for the vehicle 1, which uses gasoline, gas oil, compressed natural gas (CNG), or the like as a fuel. In the configuration of FIG. 1, a starter configured to start the engine 11 is one of the electrical components 16, which is not shown.

The exhaust gas purifying device 12 is a device configured to purify exhaust gas from the engine 11. The catalyst integrated into the exhaust gas purifying device 12 is heated by exhaust heat from the engine 11, and can purify the exhaust gas when the temperature of the catalyst becomes equal to or higher than its activation temperature.

The generator 13 is driven by the engine 11 to generate power in response to a control command from the warming control device 18. When an amount of power generated by the generator 13 is large, a torque required for the power generation by the generator 13 is also high, resulting in a high load imposed on the engine 11. In other words, in this case, the engine 11rotates at a rotation speed less than that in a case where the power generation amount is small (low load).

Examples of the capacitor 14 include an electric double layer capacitor (EDLC). The EDLC can instantly charge/discharge a large amount of power compared with a battery that uses a chemical reaction. The capacitor 14 is configured to store the power generated by the generator 13, and supply the stored power to the battery 15 or the electrical components 16 via the power control circuit 17, which is described in detail later. In this embodiment, a description is given of an example in which the EDLC is used as an example of the capacitor 14, but a capacitor that can substitute the EDLC (e.g., a lithium ion capacitor or an electrolytic capacitor) may be used.

The battery 15 is generally a lead-acid battery for a motor vehicle, but may be a main battery, for example, a lithium ion battery, which is used for travel of a hybrid vehicle.

The electrical components 16 include an illumination device, an audio device, a car navigation system, a car air conditioner, and the like of the vehicle 1 as well as the starter, a coolant heater, a block heater, a catalyst heater, and the like of the engine 11. The electrical components 16 operate while using the capacitor 14 or the battery 15 as a power supply.

The power control circuit 17 is configured to control the supply of the power generated by the generator 13 to the battery 15 and the electrical components 16, and control the supply of the power stored in the capacitor 14 to the battery 15 and the electrical components 16 based on the control of the warming control device 18. As an example, as illustrated in FIG. 2, the power control circuit 17a is constructed by four switches SW1, SW2, SW3, and SW4. The power generated by the generator 13 can be supplied to the capacitor 14 with priority over the battery 15 for the storage of the power by bringing the switch SW1 into an on state and bringing the switches SW2 and SW3 into an off state. On this occasion, the switch SW4 may be in the on state or in the off state. In other words, the switch SW4 is not involved with the operation in which the power generated by the generator 13 is supplied to the capacitor 14 for the storage of the power with priority over the battery 15. Further, the power stored in the capacitor 14 is used to charge the battery 15 by bringing the switches SW1 and SW2 into the off state and bringing the switches SW3 and SW4 into the on state.

As illustrated in FIG. 2, the battery 15 can be disconnected from other components such as the capacitor 14 and the electrical components 16, and the capacitor 14 can be connected only to the electrical components 16 by constructing the power control circuit 17a with the four switches SW1, SW2, SW3, and SW4. With this configuration, when the voltage of the capacitor 14 needs to be decreased to a predetermined voltage, the voltage of the capacitor 14 can be decreased to the predetermined voltage independently of the voltage of the battery 15.

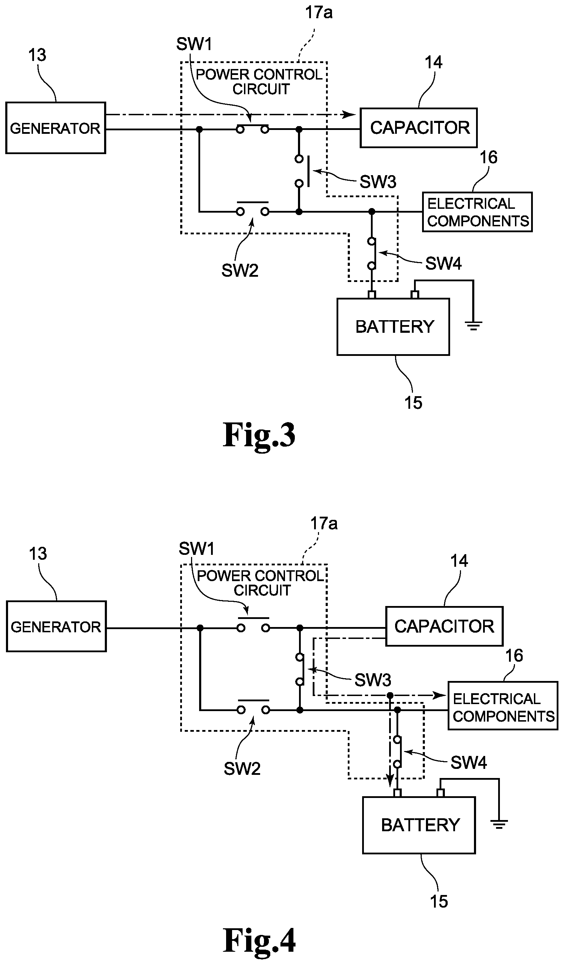

FIG. 3, FIG. 4, FIG. 5 and FIG. 6 are illustrations of different on/off states of the four switches SW1, SW2, SW3, and SW4 constructing the power control circuit 17a. While mechanical contact structures are illustrated as the switches SW1, SW2, SW3, and SW4, those structures are schematic structures for the sake of ease of description, and non-contact switches, for example, semiconductor switches may actually be used.

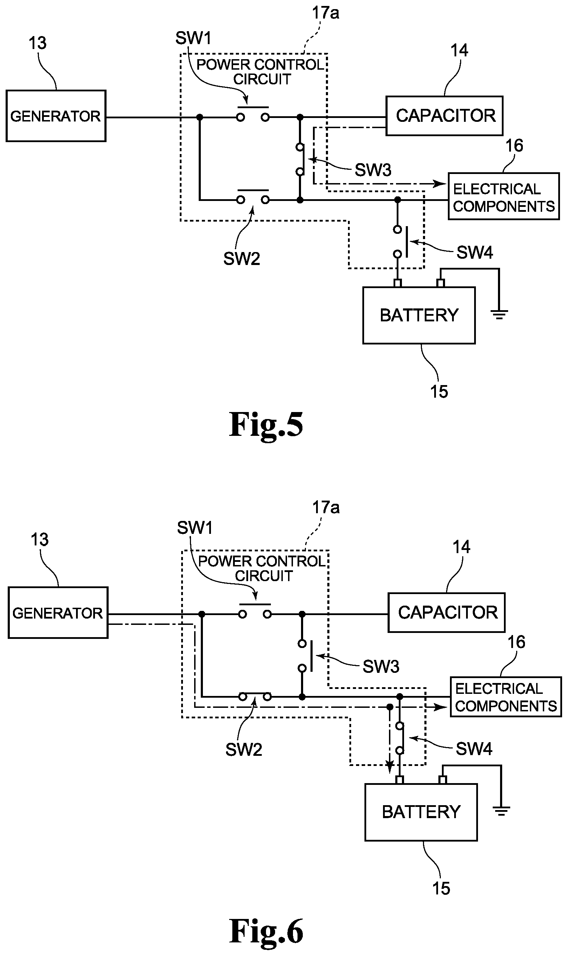

In an example of FIG. 3, the switches SW1 and SW4 are in the on state, and the switches SW2 and SW3 are in the off state. On this occasion, the generator 13 and the capacitor 14 are connected to each other (illustrated as the long dashed short dashed line), the generator 13 and the battery 15/electrical components 16 are not connected to each other, and the capacitor 14 and the battery 15/electrical components 16 are not connected to each other. In an example of FIG. 4, the switches SW3 and SW4 are in the on state, and the switches SW1 and SW2 are in the off state. On this occasion, the capacitor 14 and the battery 15/electrical components 16 are connected to each other (illustrated as the long dashed short dashed line), the generator 13 and the capacitor 14 are not connected to each other, and the generator 13 and the battery 15/electrical components 16 are not connected to each other. In an example of FIG. 5, the switch SW3 is in the on state, and the switches SW1, SW2, and SW4 are in the off state. On this occasion, the capacitor 14 and the electrical components 16 are connected to each other (illustrated as the long dashed short dashed line), the capacitor 14 and the battery 15 are not connected to each other, the generator 13 and the capacitor 14 are not connected to each other, and the generator 13 and the battery 15/electrical components 16 are not connected to each other. In an example of FIG. 6, the switches SW2 and SW4 are in the on state, and the switches SW1 and SW3 are in the off state. On this occasion, the generator 13 and the battery 15/electrical components 16 are connected to each other (illustrated as the long dashed short dashed line), the generator 13 and the capacitor 14 are not connected to each other, and the capacitor 14 and the battery 15/electrical components 16 are not connected to each other.

The supply of power is controlled by switching the switches SW1, SW2, SW3, and SW4 to the on state or the off state based on the control of a warming control device 18a. When a restriction needs to be imposed on a charge current from the capacitor 14 to the battery 15, a limiting resistor may be provided.

The warming control device 18a controls the power control circuit 17a, thereby controlling the voltage of the capacitor 14 so that the voltage of the capacitor 14 reaches the minimum voltage before the start of the engine 11. After the start of the engine 11, the warming control device 18a also controls the power control circuit 17a to cause the engine 11 to drive the generator 13 so that a predetermined load (hereinafter referred to as "starting load") is imposed on the engine, and stores the power generated by the generator 13 in the capacitor 14.

Before starting the engine 11, the warming control device 18a controls the power control circuit 17a and controls the voltage of the capacitor 14 so that the voltage of the capacitor 14 is set to the minimum voltage . The purpose is to secure a sufficient capacity in the capacitor 14 so that the generated power is charged in the capacitor 14 when the engine 11 drives the generator 13 at the time of starting the engine 11. In other words, the voltage of the capacitor 14 when the starting load is applied to the engine 11 and the power generated by the engine 11 driving the generator 13 is sufficiently charged to the capacitor 14 is referred to as the minimum voltage The starting load is a load required for the engine 11 to generate the exhaust gas sufficient for the catalyst of the exhaust gas purifying device 12 to reach the active temperature in a short period even at a rotation speed of a predetermined rotation speed or less.

Moreover, the state before the start of the engine 11 is a state in which the exhaust gas is not generated. For example, a state in which a key switch of the vehicle 1 is in an off state, a state in which the key switch of the vehicle 1 is an on state but the starter is not started, and a state in which the starter is started and the engine 11 starts rotating, but fuel in cylinders (not shown) of the engine 11 is not ignited are states before the start of the engine 11. Moreover, the state after the start of the engine 11 is a state in which the exhaust gas is generated. For example, a state in which the engine 11 is rotated by the rotation of the starter and the fuel in the cylinders is ignited, and a state in which the rotation of the starter is stopped and the engine 11 is autonomously rotating are states after the start of the engine 11.

### (About Warming Control Processing)

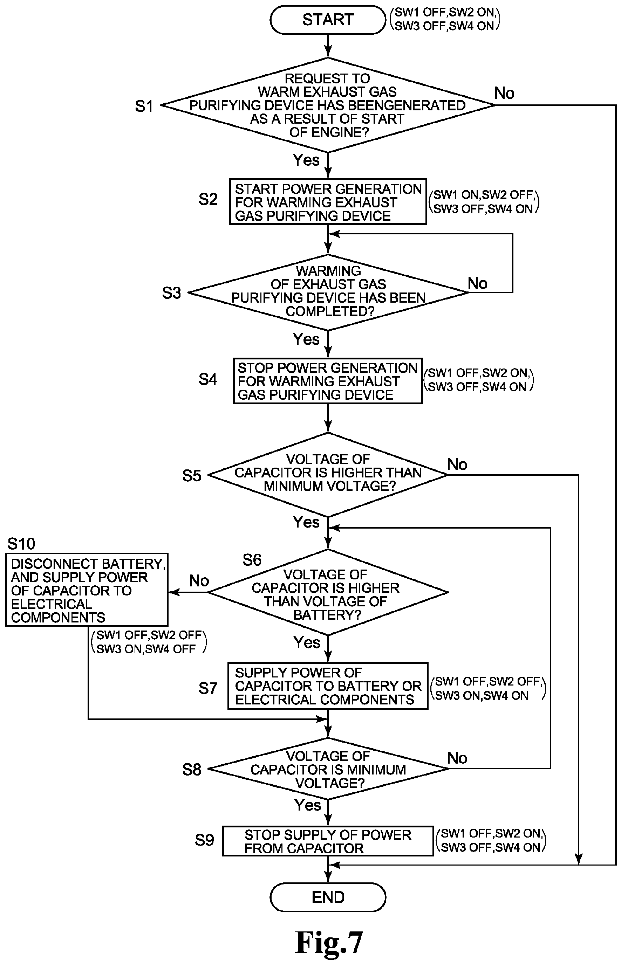

Referring to a flowchart of FIG. 7, a description is now given of warming control processing carried out by the warming control device 18a on the exhaust gas purifying device 12. This processing is started when the key switch (not shown) of the vehicle 1 is brought into the on state. The processing from "START" to "END" of the flowchart of FIG. 7 is processing for one cycle, and the processing is repeated even after the processing for one cycle is finished (END) as long as the key switch is in the on state. The warming control device 18a is configured to control the voltage of the capacitor 14 to reach the minimum voltage as described later. When the engine is started, as illustrated in FIG. 6, the switches SW1, SW2, SW3, and SW4 of the power control circuit 17a are in a state in which the switches SW2 and SW4 are in the on state and the switches SW1 and SW3 are in the off state. Thus, the generator 13 is not connected to the capacitor 14, and is connected to the battery 15 and the electrical components 16.

In Step S1, the warming control device 18a determines whether or not a request to warm the exhaust gas purifying device 12 has been issued as a result of the start of the engine 11. The engine 11 is started to rotate by the starter (not shown) which is activated when the key switch is operated to turn on, and the engine 11 is started to operate by igniting the fuel in the cylinders (not shown) of the engine 11. In Step S1, when the request to warm the exhaust gas purifying device 12 is determined to have been issued, the processing proceeds to Step S2. On the other hand, in Step S1, when the request to warm the exhaust gas purifying device 12 is determined not to have been issued, this warming control processing for the exhaust gas purifying device 12 is finished (END) . On this occasion, the request to warm the exhaust gas purifying device 12 is a signal generated by an electric control unit (ECU) (not shown) included in the exhaust gas purifying device 12 to prompt the warming control device 18a to warm the exhaust gas purifying device 12. This ECU generates the request to warm the exhaust gas purifying device 12 when the ECU determines, by referring to information such as the temperature of the engine 11, the ambient temperature, and a period elapsed after a previous stop of the operation, that the warming of the exhaust gas purifying device 12 is necessary for quickly increasing the temperature of the catalyst of the exhaust gas purifying device 12 to the active temperature or higher.

In Step S2, the warming control device 18a starts the power generation by the generator 13 for warming the exhaust gas purifying device 12 (starts the power generation for warming the exhaust gas purifying device) . Specifically, the warming control device 18a controls the generator 13 to generate electric power for imposing the starting load on the engine 11. Moreover, as illustrated in FIG. 3, the warming control device 18a brings the switches SW1 and SW4 of the power control circuit 17a into the on state, and brings the switches SW2 and SW3 into the off state, thereby connecting the generator 13 and the capacitor 14 to each other, and disconnecting the generator 13 and the battery 15 from each other so that the power generated by the generator 13 is supplied to and stored in the capacitor 14. In other words, the power generated by the generator 13 is supplied to and stored in the capacitor 14 with priority over the battery 15. The amount of power to be generated by the generator 13 is described later. In Step S2, when the power generation by the generator 13 is started, the processing proceeds to Step S3.

In addition, the generator 13 is caused to generate power, and the engine output corresponding to the load is increased. Moreover, in addition to the increase in the output of the engine 11, the exhaust gas temperature may be increased, and the exhaust gas amount may be increased while the output increase is suppressed low by retarding the ignition timing of the engine 11.

In Step S3, the warming control device 18a determines whether or not the warming of the exhaust gas purifying device 12 has been completed. In Step S3, when the warming of the exhaust gas purifying device 12 is determined to have been completed, the processing proceeds to Step S4. On the other hand, in Step S3, when the warming of the exhaust gas purifying device 12 is determined not to have been completed yet, this processing is repeated. Whether or not the warming of the exhaust gas purifying device 12 has been completed can be determined by the warming control device 18a, which controls respective parts of the vehicle 1, acquiring temperature information (e.g., coolant temperature information, or information of a temperature sensor mounted to the exhaust gas purifying device 12) on the engine 11, and determining whether or not the acquired temperature information is equal to or higher than a predetermined value. Alternatively, a period from the start of the engine 11 to the activation of catalyst may experimentally be obtained, and the determination may be made based on the obtained period.

In Step S4, the warming control device 18a stops the power generation for warming the exhaust gas purifying device 12 by the generator 13. On this occasion, as illustrated in FIG. 6, the switches SW2 and SW4 are in the on state, and the switches SW1 and SW3 are in the off state. As a result, the generator 13 is connected to the battery 15 and the electrical components 16.

In Step S5, the warming control device 18a determines whether or not the voltage of the capacitor 14 is higher than the minimum voltage. In Step S5, when the voltage of the capacitor 14 is determined to be higher than the minimum voltage, the processing proceeds to Step S6. On the other hand, in Step S5, when the voltage of the capacitor 14 is determined to be the minimum voltage, the processing for the one cycle is finished (END).

In Step S6, the warming control device 18a determines whether or not the voltage of the capacitor 14 is higher than the voltage of the battery 15. In Step S6, when the voltage of the capacitor 14 is determined to be higher than the voltage of the battery 15, the processing proceeds to Step S7. On the other hand, in Step S6, when the voltage of the capacitor 14 is determined to be equal to or less than the voltage of the battery 15, the processing proceeds to Step S10. It is assumed that the state in which "the voltage of the capacitor 14 is higher than the voltage of the battery 15" is a state in which the voltage of the capacitor 14 is not higher than a range in which the battery 15 and the electrical components 16 normally operate. Moreover, it is assumed that the voltage of the capacitor 14 is adjusted through, for example, insertion of a resistor (not shown) or the like between the capacitor 14 and the battery 15/electrical components 16 so as not to be higher than the range in which the battery 15 and the electrical components 16 normally operate.

In Step S7, as illustrated in FIG. 4, the warming control device 18a carries out control of bringing the switches SW3 and SW4 of the power control circuit 17a into the on state, and bringing the switches SW1 and SW2 into the off state, thereby connecting the capacitor 14 and the battery 15/electrical components 16 to each other, disconnecting the generator 13 and the capacitor 14 from each other, and disconnecting the generator 13 and the battery 15/electrical components 16 from each other. In Step S7, the voltage of the capacitor 14 is higher than the voltage of the battery 15, and the power stored in the capacitor 14 is thus supplied to the battery 15 and the electrical components 16. When the supply of the power of the capacitor 14 to the battery 15 or the electrical components 16 is started, the processing proceeds to Step S8.

In Step S8, the warming control device 18a determines whether or not the voltage of the capacitor 14 is the minimum voltage. In Step S8, when the voltage of the capacitor 14 is determined to be the minimum voltage, the processing proceeds to Step S9. On the other hand, in Step S8, when the voltage of the capacitor 14 is determined not to be the minimum voltage, the processing returns to Step S6.

In Step S9, the warming control device 18a stops the power supply from the capacitor 14 to the battery 15 and the electrical components 16. In other words, as illustrated in FIG. 6, the warming control device 18a carries out control of bringing the switch SW2 of the power control circuit 17a into the on state, bringing the switches SW1 and SW3 into the off states, and bringing SW4 into the on state, thereby disconnecting the battery 15 and the electrical components 16 from the capacitor 14, and connecting the generator 13 and the battery 15/electrical components 16 to each other (END) . As a result, the power of the battery 15 can be prevented from flowing back to the capacitor 14. Moreover, the generator 13 is brought into a normal state, namely, a state of supplying the power to the battery 15 and the electrical components 16 in response to a request from the vehicle 1.

In Step S10, as illustrated in FIG. 5, the warming control device 18a carries out control of bringing the switch SW3 of the power control circuit 17a into the on state, and bringing the switches SW1, SW2, and SW4 into the off state, thereby connecting the capacitor 14 and the electrical components 16 to each other, disconnecting the capacitor 14 and the battery 15 from each other, disconnecting the generator 13 and the capacitor 14 from each other, and disconnecting the generator 13 and the battery 15/electrical components 16 from each other. As a result, the power stored in the capacitor 14 is supplied to the electrical components 16. In Step S10, when the supply of the power of the capacitor 14 to the electrical components 16 is started, the processing proceeds to Step S8. As a result of the processing in Step S10, even when the minimum voltage of the capacitor 14 is less than the voltage of the battery 15, the voltage of the capacitor 14 can be decreased to the minimum voltage by disconnecting the capacitor 14 and the battery 15 from each other, and connecting the capacitor 14 and the electrical components 16 to each other so that the power of the capacitor 14 is consumed by the electrical components 16. When the switch SW4 is in the on state, the voltage of the capacitor 14 and the voltage of the battery 15 balance with each other, and thus the voltage of the capacitor 14 does not become the voltage of the battery 15 or less.

As described above, the generator 13 is driven so that the starting load is applied to the engine 11 in order to warm the exhaust gas purifying device 12, and the power generated by the generator 13 is used to charge the capacitor 14 (Step S2). Thus, the load larger than that of the low load state including the idle state by an amount of the starting load can be imposed on the engine 11. In other words, the rotation of the engine 11 can be suppressed during the warming of the exhaust gas purifying device 12, and thus noise and vibration in the idle state are decreased, and a sudden start during start from the idle state can be avoided.

Moreover, as described above, after the warming of the exhaust gas purifying device 12 has been completed (Step S4), the power control circuit 17a is controlled so that the battery 15 and the electrical components 16 or only the electrical components 16 are connected to the capacitor 14 based on the relationship in the magnitude of the voltages accumulated in the capacitor 14 and the battery 15, and the power stored in the capacitor 14 is supplied to the battery 15 and the electrical components 16 or only to the electrical components 16 (Step S7 or Step S10). Thus, the voltage of the capacitor 14 can be decreased to the minimum voltage, and the capacity of the capacitor 14 for storing the power generated by the engine 11 driving the generator 13 at the starting load can be secured. As a result, the capacitor 14 is brought into a state in which a large amount of power can be stored after the start of the engine 11, and thus the generator 13 can generate a large amount of power. In other words, when the engine 11 is in the key-off state, the voltage of the capacitor 14 has reached the minimum voltage, and thus the large load can always be imposed on the engine 11 after the engine 11 is started. The period for warming the exhaust gas purifying device 12 can thus further be decreased. Moreover, the load imposed on the engine is not restricted by a charge state of the battery as in a case of the related art in which the load imposed on the engine is increased by driving the generator and generated power is used to charge the battery so that the exhaust gas purifying device 12 is warmed.

Further, the power stored in the capacitor 14 is supplied to the battery 15 and the electrical components 16, thereby the power in the capacitor 14 can efficiently be used. A charge/discharge efficiency of a general battery is said to be equal to or higher than 87%, whereas a charge/discharge efficiency of the capacitor 14 is equal to or higher than 95%. Thus, the power generated during the warming of the exhaust gas purifying device 12 can efficiently be stored in the capacitor 14, and after the warming, the power generated during the warming of the exhaust gas purifying device 12 can effectively be used for the charge of the battery 15 and the supply of power to the electrical components 16. In other words, the fuel is consumed as a result of the increase in the output of the engine 11 after the start of the engine 11, but the energy generated on this occasion can efficiently be regenerated by using the capacitor 14, resulting in a decrease in the vehicle fuel consumption.

### (Other Embodiments)

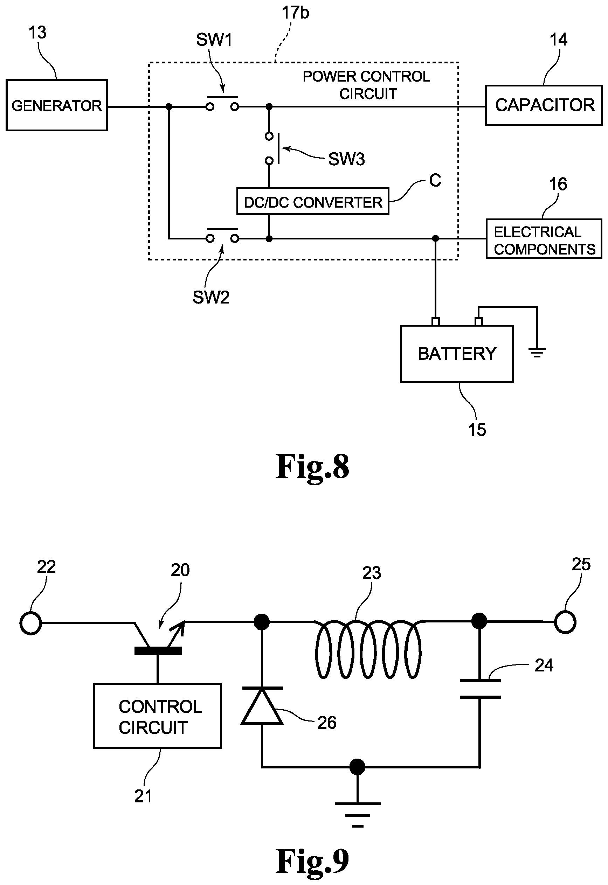

In the above description, control circuit 17a is constructed by the switches SW1, SW2, SW3, and SW4. However, a DC/DC converter C may be added in series to the switch SW3 together with the switches SW1, SW2, and SW3 to construct a power control circuit 17b illustrated in FIG. 8.

When the maximum voltage of the capacitor 14 is less than the minimum voltage (11.2 volts as an example) of the battery 15, the power is not supplied from the capacitor 14 to the battery 15 in the above-mentioned example, and thus such a capacitor 14 or a battery 15 cannot be used. However, the power of the capacitor 14 can be used to charge the battery 15 by using a boost DC/DC converter C to boost the maximum voltage of the capacitor 14 to a voltage higher than the minimum voltage of the battery 15. In other words, the capacitor 14 having such a specification that its maximum voltage is less than the minimum voltage (11.2 volts as an example) of the battery 15 may be used.

In this case, the voltage of the capacitor 14 (precisely, a voltage of the DC/DC converter C on a side connected to the battery 15) is boosted to a voltage lower than the maximum voltage of the battery 15 but higher than the voltage of the battery 15 by the DC/DC converter C, and thus the processing in Steps S6 and S10 is no longer necessary in the warming control processing illustrated in FIG. 7. Moreover, the power is not supplied from the battery 15 to the capacitor 14, and thus the switch SW4 for disconnecting the battery 15 from the capacitor 14 and the electrical components 16 is not necessary, either.

Meanwhile, when the minimum voltage of the capacitor 14 is higher than the maximum voltage (13.8 volts as an example) of the battery 15, in the above-mentioned example, the power at the maximum voltage is supplied to the battery 15, and the battery 15 breaks. Thus, the above-mentioned capacitor 14 or battery 15 cannot be used. However, the power of the capacitor 14 can be used to charge the battery 15 by using a back DC/DC converter C to step down the minimum voltage of the capacitor 14 to a voltage less than the maximum voltage of the battery 15. In other words, the capacitor 14 having such a specification that its minimum voltage is higher than the maximum voltage (13.8 volts as an example) of the battery 15 may be used.

In this case, the voltage of the capacitor 14 (precisely, a voltage of the DC/DC converter C on a side connected to the battery 15) is boosted to a voltage lower than the maximum voltage of the battery 15 but higher than the voltage of the battery 15 by the DC/DC converter C, and thus the processing in Steps S6 and S10 is no longer necessary in the warming control processing. Moreover, the voltage supplied from the capacitor 14 to the battery 15 is variable, and thus the power can be supplied from the capacitor 14 to the battery 15 even when the voltage of the capacitor 14 is less than the voltage of the battery 15. In other words, a state in which the voltage of the capacitor 14 and the voltage of the battery 15 balance with each other and the voltage of the capacitor 14 does not reach the voltage of the battery 15 or less does not occur. Therefore, the switch SW4 for disconnecting the battery 15 from the capacitor 14 and the electrical components 16 is not necessary, either.

The capacitor 14 having a specification that cannot be used in the above-mentioned embodiment can be used through use of the DC/DC converter C in this way. Moreover, the switch SW4 for disconnecting the battery 15 from other members is not necessary.

Moreover, when the maximum voltage of the battery 15 exists between the minimum voltage and the maximum voltage of the capacitor 14, the battery 15 can be charged in accordance with the variation of the voltage of the capacitor 14 by using a buck/boost DC/DC converter C capable of switching between the stepping up and the stepping down in accordance with the voltage of the capacitor 14 through control of a warming control device 18b (not shown) (Step S7) . Further, with the DC/DC converter C, the power of the capacitor 14 can efficiently be used to charge the battery 15, or can be supplied to the electrical components 16 without occurrence of a voltage drop as in a case where a limiting resistor is used.

FIG. 9 is a diagram for illustrating a circuit example of the buck DC/DC converter C. For example, in Step S7 of FIG. 7, the warming control device 18b carries out control of bringing the switch SW3 of the power control circuit 17b into the on state, and bringing the switches SW1 and SW2 into the off state, thereby connecting the capacitor 14 and the battery 15/electrical components 16 to each other, disconnecting the generator 13 and the capacitor 14 from each other, and disconnecting the generator 13 and the battery 15/electrical components 16 from each other. Moreover, when the warming control device 18b controls a control circuit 21 of the DC/DC converter C to bring a switching device 20 into the on state, a DC current flows from an input terminal 22 to a coil 23. The coil 23 is magnetized by the DC current flowing from the input terminal 22. On this occasion, the DC current is prevented from flowing from the input terminal 22 to the coil 23 by self-induction of the coil 23. As a result, the voltage applied to the input terminal 22 is stepped down. On this occasion, charge is stored in a capacitor 24, and a terminal voltage of the capacitor 24 is the same as the voltage in the above-mentioned case of the stepping down. Moreover, the terminal voltage of the capacitor 24 is the same as an output voltage of an output terminal 25. When the switching device 20 is brought into an off state through the control of the control circuit 21, the flow of the DC current from the input terminal 22 to the coil 23 is stopped, and as a result of disappearance of magnetic flux of the coil 23, a reflux current, which flows from the coil 23 back to the coil 23 via the capacitor 24 and the diode 26, flows. Electric energy is supplied to the capacitor 24 for a while through this reflux current even when the switching device 20 is in the off state. As a result, a voltage less than the voltage applied to the input terminal 22 is continuously output to the output terminal 25.

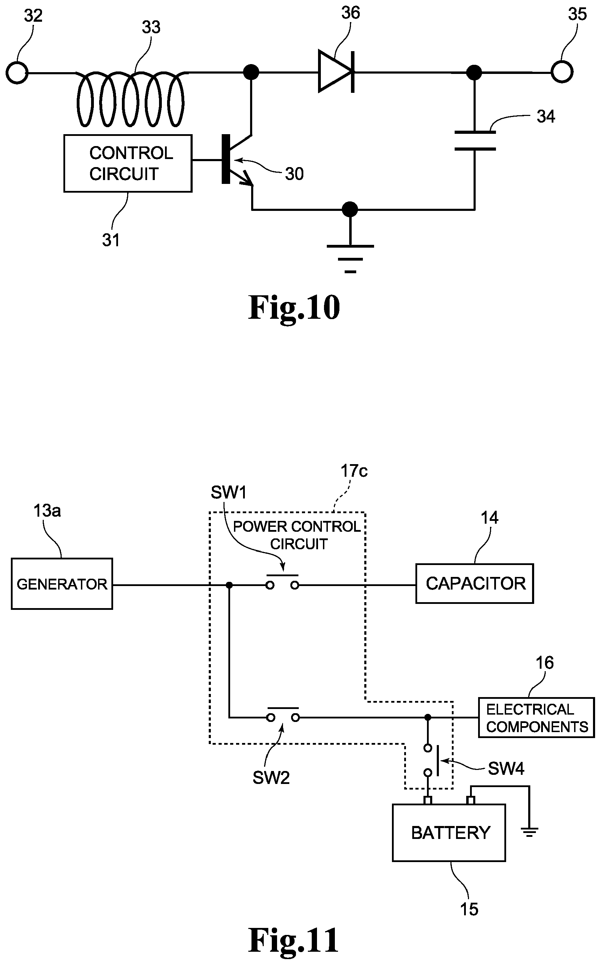

FIG. 10 is a diagram for illustrating a circuit example of the boost DC/DC converter C. When a switching device 30 is brought into an on state through control of the control circuit 31, a DC current flows from an input terminal 32 to a coil 33. The coil 33 is magnetized by the DC current flowing from the input terminal 32. When the switching device 30 is brought into the off state by the control circuit 31 before the coil 33 is magnetically saturated, a high voltage is generated between both ends of the coil 33 as a result of disappearance of the magnetic flux of the coil 33. As a result, a voltage, which is a sum of the voltage applied to the input terminal 32 and a voltage generated in the coil 33, is also applied to a capacitor 34. As a result, charge is stored in the capacitor 34 so that the terminal voltage of the capacitor 34 is the same voltage as that in the boost case, and is also the same voltage as an output voltage of the output terminal 35. The diode 36 prevents the charge stored in the capacitor 34 from flowing back to the input terminal 32 side.

Moreover, the above-mentioned buck/boost DC/DC converter C has such a circuit configuration as to have both the circuit illustrated in FIG. 9 and the circuit illustrated in FIG. 10, and the buck/boost DC/DC converter C can be implemented by appropriately switching between the two circuits. Alternatively, in the circuit configuration of the boost DC/DC converter illustrated in FIG. 10, the buck DC/DC converter C can be implemented through the circuit configuration of FIG. 10 by the control circuit 31 appropriately controlling timings of turning on/off the switching device 30 to suppress an increase in the current flowing from the input terminal 32 to the coil 33 so as to be low, and to decrease the voltage generated between both ends of the coil 33. As a result, the DC/DC converter C having the circuit configuration of FIG. 10 can be of the buck/boost type.

Further, FIG. 11 is an example of a power control circuit 17c in which the generator 13a can be switched between a power generation execution state and a power generation stop state through control of a warming control device 18c (not shown), and the switch SW3 illustrated in FIG. 2 and the like are omitted. In other words, the power of the capacitor 14 is supplied to the battery 15 and the electrical components 16 by bringing the generator 13a into the power generation stop state and bringing the switches SW1, SW2, and SW4 into the on state. Alternatively, the power of the capacitor 14 is supplied only to the electrical components 16 by bringing the generator 13a into the power generation stop state, bringing the switches SW1 and SW2 into the on state, and bringing the switch SW4 into the off state.

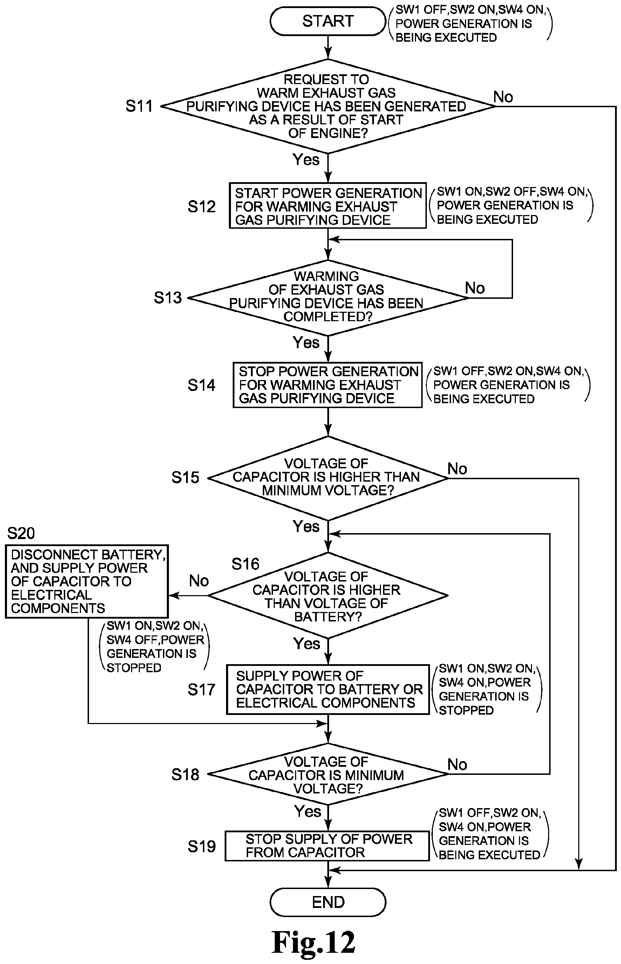

In the warming control processing in the configuration example of FIG. 11, as illustrated in a flowchart of FIG. 12, at "START", the switch SW1 is in the off state, the switch SW2 is in the on state, the switch SW4 is in the on state, and the generator 13a is in the power generation execution state. As a result, the power generated by the generator 13a is supplied to the battery 15 and the electrical components 16. In Steps S11 to S20, the same processing as that in Steps S1 to S10 of FIG. 7 is carried out, and a description thereof is appropriately omitted. In Step S12, the switch SW1 is in the on state, the switch SW2 is in the off state, the switch SW4 is in the on state, and the generator 13a is in the power generation execution state. As a result, the power generated by the generator 13a is stored in the capacitor 14. In Step S14, the switch SW1 is in the off state, the switch SW2 is in the on state, the switch SW4 is in the on state, and the generator 13a is in the power generation execution state. As a result, the power generated by the generator 13a is supplied to the battery 15 and the electrical components 16. In Step S17, the switch SW1 is in the on state, the switch SW2 is in the on state, the switch SW4 is in the on state, and the generator 13a is in the power generation stop state. As a result, the generator 13a is connected to the capacitor 14, the battery 15, and the electrical components 16, but is not carrying out the power generation, and thus the power is supplied to the battery 15 and the electrical components 16 not from the generator 13a but from the capacitor 14. In Step S19, the switch SW1 is in the off state, the switch SW2 is in the on state, the switch SW4 is in the on state, and the generator 13a is in the power generation execution state. As a result, the power generated by the generator 13a is supplied to the battery 15 and the electrical components 16. In Step S20, the switch SW1 is in the on state, the switch SW2 is in the on state, the switch SW4 is in the off state, and the generator 13a is in the power generation stop state. As a result, the power stored in the capacitor 14 is supplied to the electrical components 16.

In the description given above, the warming control devices 18, 18a, 18b, and 18C are configured to control the power control circuits 17, 17a, 17b, and 17c, respectively, thereby controlling the voltage of the capacitor 14 so that the voltage of the capacitor 14 reaches the minimum voltage before the start of the engine 11. However, the current may be prevented from flowing back from the battery 15 to the capacitor 14, and the voltage of the capacitor 14 may reach the minimum voltage before the start of the engine 11 by using such a property of the capacitor 14 that its voltage quickly decreases through self discharge compared with the storage method that is based on the chemical reaction, for example, that of the battery 15.

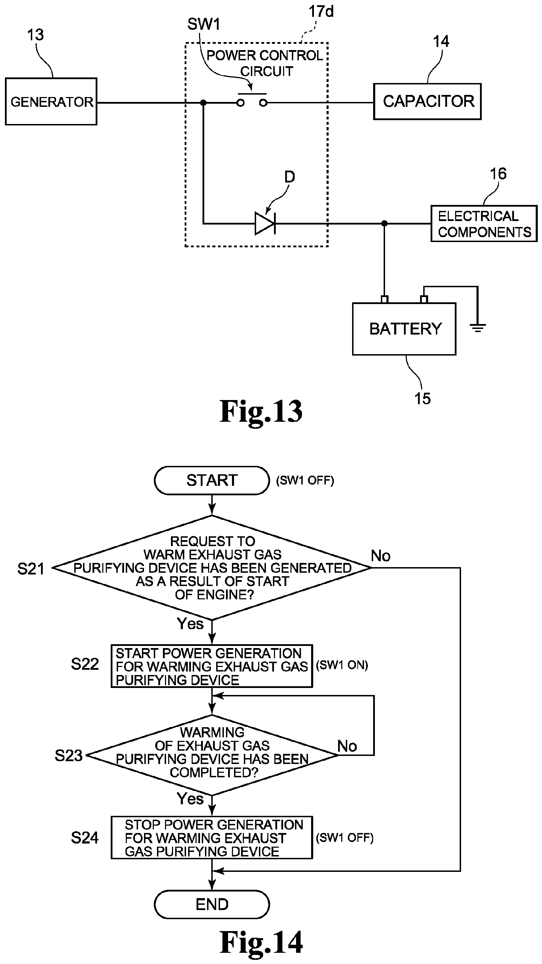

For example, in an example of a power control circuit 17d having a diode D illustrated in FIG. 13, a warming control circuit 18d (not shown) is configured to omit the processing of bringing the capacitor 14 to the minimum voltage, and the voltage of the capacitor 14 drops due to the self discharge. This is because the voltage of the capacitor 14 decreases through the self discharge of the capacitor 14 after several hours, and may fall below, for example, the minimum voltage. In other words, "when the engine 11 is stopped for such a long period as to require the 'warming'", a large amount of power can instantly be stored in the capacitor 14 upon the next start of the engine 11. As a result, in the example illustrated in FIG. 13, as illustrated in the flowchart of FIG. 14, the processing in Steps S5 to S10 in the flowchart of FIG. 7 can be omitted. In Steps S21 to S24 of FIG. 14, the same processing as that in Steps S1 to S4 of FIG. 7 is carried out, and a description thereof is thus appropriately omitted.

In the example of FIG. 14, the warming control device 18d brings the switch SW1 of the power control circuit 17d into the on state during the warming (Step S22) of the exhaust gas purifying device 12. As a result, the generator 13 is connected to the capacitor 14. On this occasion, even when the voltage of the capacitor 14 is less than the voltage of the battery 15, the diode D stops the current from the battery 15 to the capacitor 14, and the capacitor 14 can be prevented from being charged by the power of the battery 15. In the flowchart of FIG. 14, at "START", the switch SW1 is in the off state, and the generator 13 is connected to the battery 15 and the electrical components 16 via the diode D. In Step S22, the switch SW1 is brought into the on state, and the generator 13 is connected to the capacitor 14. In Step S24, the switch SW1 is brought into the off state, and the generator 13 is again connected to the battery 15 and the electrical components 16 via the diode D.

Moreover, except for the examples illustrated in FIG. 13 and FIG. 14, in the description given above, the processing of decreasing the voltage of the capacitor 14 to the minimum voltage is carried out immediately after the completion of the warming of the exhaust gas purifying device 12. However, the processing may be carried out at another timing as long as the voltage of the capacitor 14 is the minimum voltage before the start of the engine 11. For example, before the start of the engine 11, the voltage of the capacitor 14 maybe decreased to the minimum voltage through a resistor discharge. Alternatively, when the key switch of the vehicle 1 is turned on under a state in which the power of the capacitor 14 is not sufficiently discharged, and the warming request is thus generated, the power of the capacitor 14 may be used, for example, to drive the starter of the engine 11. A large amount of power is generally necessary for driving the starter of the engine 11, and thus the power of the capacitor 14 can be brought to the minimum voltage before the start of the engine 11. Alternatively, the power of the capacitor 14 may be supplied to a coolant heater depending on necessity. In this way, the timing and the method of bringing the capacitor 14 to the minimum voltage may be any timing and method as long as the timing is before the start of the engine 11.

Moreover, in the above mentioned embodiment, it is assumed that the increase in the load imposed on the engine 11 is achieved by the increase in the load by the charge of the capacitor 14 through the power generation, but a load by other means may be added. For example, the power may be supplied to a catalyst heating heater after the start of the engine 11.

Moreover, in the description given above, an example in which the determination of the warming of the exhaust gas purifying device 12 is carried out in an on/off manner is assumed, but the power generation load may be decreased in a stepwise manner as the warming state of the exhaust gas purifying device 12 progresses.

Moreover, in the above mentioned embodiment, it is assumed that the engine 11 is started through the operation of the key switch of the vehicle 1 from the off state to the on state, but a case in which the engine 11 is started through release of a brake pedal or depression of an accelerator pedal during idle reduction may be assumed.

Moreover, the above-mentioned generator 13 is usually intended to charge the battery 15, and is thus configured to generate a current of approximately 50 A. In contrast, the capacitor 14 may be charged through a current of 300 A or higher, which is higher than that for the battery 15. Thus, the generator 13 maybe a generator capable of generating a current of from 100 A to 300 A. As a result, when the generator 13 is driven as the load imposed on the engine 11, a load, which is approximately twice to six times of the load imposed by the related-art generator 13 configured to generate the current of approximately 50 A, can be applied to the engine 11. Thus, the period for warming the exhaust gas purifying device 12 can further by decreased.

Moreover, in the above mentioned embodiment, it is assumed that the capacitor 14 is charged after the start of the engine 11, but the capacitor 14 may be used for charging/discharging at another timing as long as the capacitor 14 reaches the minimum voltage before the start of the engine 11. For example, the capacitor 14 may be used for a method in which the generator 13 for the power generation is used in place of a foot brake to decelerate the vehicle, and then using the obtained power to charge the capacitor 14, namely, deceleration energy regeneration.

Moreover, each of the warming control devices 18, 18a, 18b, 18c, and 18d may be implemented by an information processing device executing a predetermined program installed in advance . Such an information processing device includes, for example, a memory, a central processing unit (CPU), and input/output ports, which are not shown. The CPU of the information processing device is configured to read a control program as the predetermined program from the memory or the like, and execute the control program. As a result, the functions of each of the warming control devices 18, 18a, 18b, 18c, and 18d are implemented in the information processing device. In place of the CPU, an application specific integrated circuit (ASIC), a microprocessor (microcomputer), a digital signal processor (DSP), and the like may be used.

Moreover, the predetermined program may be stored in the memory of the information processing device or the like before shipment of the warming control devices 18, 18a, 18b, 18c, and 18d, or may be stored in the memory of the information processing device or the like after the shipment of the warming control devices 18, 18a, 18b, 18c, and 18d. Further, part of the control program may be stored in the memory or the like of the information processing device after the shipment of the warming control devices 18, 18a, 18b, 18c, and 18d. The control program stored in the memory or the like of the information processing device after the shipment of the warming control devices 18, 18a, 18b, 18c, and 18d may be obtained, for example, by installing a program stored in a computer-readable recording medium, for example, a CD-ROM, or by installing a program downloaded via a transmission medium, for example, the Internet.

Further, the predetermined program includes not only a program directly executable by the information processing device but also a program executable by installing the program in a hard disk. A compressed or encrypted program is also included.

Mass production and changes in specifications (or changes in design) of the warming control devices 18, 18a, 18b, 18c, and 18d may be flexibly handled by using the information processing device and the program to implement each of the warming control devices 18, 18a, 18b, 18c, and 18d in this way.

The program executed by the information processing device may be a program for carrying out the processing in time series in accordance with the sequence described herein or a program for carrying out the processing in parallel or at a required timing, for example, a timing of call.

### Reference Signs List

1, 1a ··· vehicle, 11 ··· engine, 12 ··· exhaust gas purifying device, 13, 13a ··· generator, 14 ··· capacitor, 15 ··· battery, 16 ··· electrical components, 17, 17a, 17b, 17c, 17d ··· power control circuit (power control means, charging control means, power supply control means), 18, 18a, 18b, 18c, 18d ··· warming control device

## Claims

1. A vehicle power storage system to be used in a vehicle including an exhaust gas purifying device configured to purify exhaust gas of an engine, the vehicle power storage system comprising:
a capacitor configured to store power generated by a generator driven by the engine;
power control means for controlling supply of the power generated by the generator to a battery of the vehicle and the capacitor;
determination means for determining whether or not warming of the exhaust gas purifying device is necessary; and
control means for controlling, when the determination means determines that the warming of the exhaust gas purifying device is necessary, the power control means to cause the engine to drive the generator after the engine is started, and to supply and store the power generated by the generator to the capacitor with priority over the battery.

2. A vehicle power storage system according to claim 1, wherein:
the power control means is configured to further control supply of the power stored in the capacitor to at least the battery; and
the control means is configured to control the power control means to control a voltage of the capacitor so that the voltage of the capacitor is equal to or less than a predetermined voltage before the start of the engine.

3. A vehicle power storage system according to claim 2, wherein the power control means is configured to charge the battery with the power stored in the capacitor.

4. A vehicle power storage system according to claim 2, wherein the power control means is configured to supply the power stored in the capacitor to the battery and an electrical component, or only to the electrical component.

5. A vehicle power storage system according to claim 1, further comprising:
means for preventing power of the battery of the vehicle from being supplied to the capacitor.

6. A method of controlling a vehicle power storage system to be used in a vehicle including an exhaust gas purifying device configured to purify exhaust gas of an engine, the method comprising:
a power control step of controlling supply of the power generated by a generator to a battery and a capacitor of the vehicle;
a determination step of determining whether or not warming of the exhaust gas purifying device is necessary; and
a control step of causing, when it is determined in the processing of the determination step that the warming of the exhaust gas purifying device is necessary, by the processing of the power control step, the engine to drive the generator after the engine is started, and supplying and storing the power generated by the generator to the capacitor with priority over the battery.

7. A vehicle power storage system to be used in a vehicle including an exhaust gas purifying device configured to purify exhaust gas of an engine, the vehicle power storage system comprising:
a capacitor configured to store power generated by a generator driven by the engine;
power control means for controlling supply of the power generated by the generator to the capacitor;
determination means for determining whether or not warming of the exhaust gas purifying device is necessary;
control means for controlling, when the determination means determines that the warming of the exhaust gas purifying device is necessary, the power control means to cause the engine to drive the generator after the engine is started, and to supply and store the power generated by the generator to the capacitor; and
means for preventing power of the battery of the vehicle from being supplied to the capacitor.
